# EUROPEAN PATENT APPLICATION

(11) **EP 1 134 887 A1**
(43) Date of publication of application: **19.09.2001**
(21) Application number: 01302161.3
(22) Date of filing: 09.03.2001
(51) Int. Cl.: H02P 21/00

(54) **Frequency domain harmonic analysis methods and apparatus for electric machines**

(30) Priority: 14.03.2000 US 525187
(71) Applicant: GENERAL ELECTRIC COMPANY, Schenectady, NY 12345 (US)
(72) Inventor: Shah, Manoj Ramprasad, Latham, New York 12110 (US); Jansen, Patrick Lee, Alplaus, New York 12008 (US); Osama, Mohamed E., Niskayuna, New York 12309 (US)
(74) Representative: Pedder, James Cuthbert

(57) **Abstract**

Methods and apparatus for performing electrical machine electromagnetic analysis in the frequency domain are described. The method and apparatus are applicable to both poly phase and single phase electrical machines whether balanced or unbalanced (source, windings, magnetics, harmonics). In an exemplary embodiment of the method, magnetic analysis includes selecting and loading (104) electrical machine manufacturing data, such as a stator and rotor geometry and winding design, for example. If the power source is a voltage source, stator currents are estimated (108). If the power source is a current source, stator currents are computed. Using the stator current, estimated or computed, a magnetomotive force spectrum is computed (110). From the spectrum, a permeability distribution is computed and tested for magnetic convergence. When there is both magnetic and voltage convergence, the analysis is complete, otherwise the process is repeated.

## Description

This invention relates generally to dynamo-electric machines and, more particularly, to processes for designing motors.

Induction motors including a squirrel cage type, sheet type, or wound type rotor are utilized, for example, in commercial appliances, HVAC, and industrial facilities.

More specifically, and in operation, an induction motor, including a squirrel cage type, sheet type, or wound type rotor, rotate at a specific speed. A supply source impresses an alternating voltage on stator windings to induce an alternating current in the stator windings. The induced current generates an alternating magnetic field that induces currents in the bars of the rotor. Current through the rotor bars results in the generation of magnetic fields. As is well known, the magnetic fields generated by the stator windings and the rotor bars couple and create a torque that causes the rotor to rotate. The stator and rotor operate as a rotating transformer with a secondary (the rotor) whose secondary impedance is determined by the cross-sectional area of the rotor bars, the bar material and relative speed. The magnitude of the current in the stator windings is affected by the rotor dynamic impedance.

Motors generally are configured to meet certain steady state operating points such as rated, locked rotor, and breakdown points. Design and analysis tools exist that assist in motor design in order to achieve a desired operating profile.

Electric machine design and analysis tools usually employ a Two Axis Model (TAM), a Magnetic Circuit Model (MCM) or a Finite Element Method (FEM). TAM is described in Krause et al., Analysis of Electric Machinery, IEEE Press, 1995, while MCM is described in Ostovic, Dynamics of Saturated Electric Machines, Springer-Verlag, 1989, and FEM is described in Salon, Finite Element Analysis of Electrical Machines, Kluwer Academic Publishers, 1995.

An analysis tool which employs a Two-Axis Model (TAM) analysis, executes at a very high speed, however, the results obtained using the TAM analysis often do not have acceptable accuracy. Another analysis tool, the Finite Element Method (FEM) is very accurate, but very slow.

The Magnetic Circuit Model (MCM) analysis when performed in the time domain has an execution time significantly higher than that of the TAM analysis method and significantly lower than that of FEM, but has an acceptable accuracy level when predicting the operating profile of motors, especially single phase induction motors. The existing frequency domain analysis method is applicable only to a single frequency standing or travelling electromagnetic wave analysis such as the case for balanced polyphase machines, transformers or single phase machine at standstill. Present frequency domain methods cannot handle traveling pulsating waves where at least two distinct frequencies exist in the rotor (when it rotates) such as for a single phase machine or a spatially unbalanced polyphase machine or a polyphase machine fed by an unbalanced and/or harmonic rich power supply. In any of such cases a time domain MCM or FEM ana'ysis is presently used.

It is seen to be desirable to develop an analysis approach with acceptable accuracy comparable to the time domain FEM analysis method, while still reducing execution times over both the time domain FEM analysis method and the existing time domain MCM analysis method.

The present invention is in one aspect, a method of doing a Magnetic Circuit Model (MCM) or a Finite Element Method (FEM) motor design analysis in the frequency domain. A frequency domain analysis is faster than the time domain counterpart, while delivering comparable accuracy. The method includes the conventional steps of selecting and loading electrical machine manufacturing data, for example rotor and stator geometry, winding designs, rotor speed, and material properties. Further steps include determining if the power source is a voltage source or a current source in order to obtain a stator current, computing a magnetomotive force (mmf) spectrum using the stator current, computing a permeability distribution from the spectrum and testing for magnetic convergence.

The invention will now be described in greater detail, by way of example, with reference to the accompanying drawings, in which:
Figure 1 is a perspective view of a motor rotor;
Figure 2 is a partial perspective cross-section view of a stator and a rotor designed in accordance with one embodiment of the present invention;
Figure 3 is an exemplary embodiment of an MCM (Magnetic Circuit Model) of a section of an electric machine; and
Figure 4 is a flow chart illustrating a frequency domain motor analysis process.

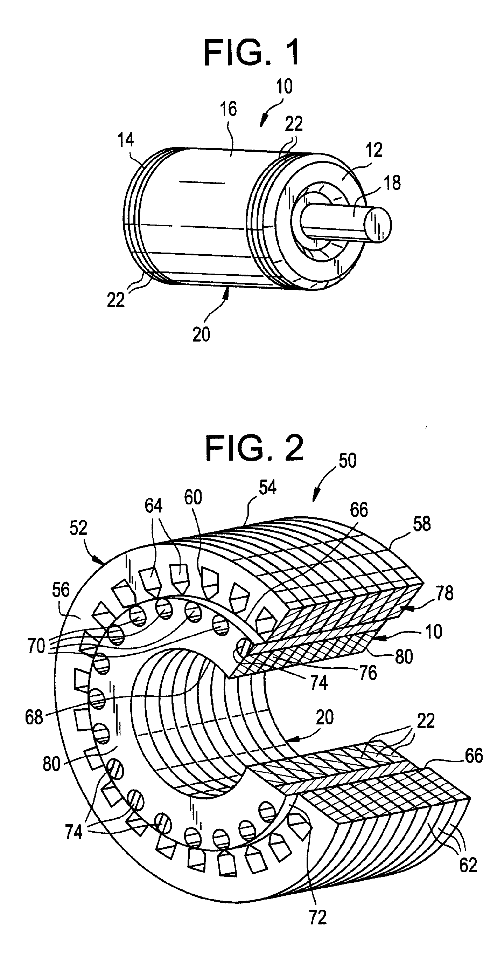

A perspective view of a rotor 10 is shown in Figure 1. For an induction motor, rotor 10 can be a squirrel cage as illustrated in Figure 1 or alternatively it can be either with winding or a solid sheet. The rotor conductors' material is usually a non-magnetic conductive metal such as aluminum, copper or GLIDCOP® dispersion strengthened copper (GLIDCOP is a trademark of OMG Americas). Rotor 10 can be cast, fabricated or brazed. For rotor 10 described in Figure 1, first and second end rings 12 and 14 are at opposite ends of rotor 10, and end rings 12 and 14 short respective first and second ends of rotor bars 16. Rotor shaft 18 extends through rotor core 20 formed by a plurality of laminations 22. Rotor core 20 may comprise solid iron or may comprise of laminations 22.

Figure 2 illustrates a partial perspective cross-section view of a motor 50 including rotor 10 and a stator 52. Stator 52 has a stator core 54 and stator windings (not shown). Stator core 54 has a first end 56, a second end 58, and a substantially cylindrical stator bore 60 extending from stator first end 56 to stator second end 58. Stator core 54 is formed by a plurality of identical stator laminations 62. Each stator lamination 62 includes a plurality of stator winding slots 64 at an inner periphery 66 of stator bore 60. Stator windings (not shown) are inserted into stator winding slots 64, and the stator windings form a selected even number of poles, e.g., two poles, four poles, or six poles.

Rotor 10, as shown, is substantially cylindrical and is mounted within stator bore 60, e.g., using a cantilever structure and/or bearings, so that rotor 10 is coaxial with stator bore 60. Particularly, rotor 10 is mounted rotatably within stator bore 60 so that rotor 10 rotates relative to stator 52. Rotor 10, alternatively, may be mounted within stator bore 60 so that stator 52 rotates relative to rotor 10.

Referring to a squirrel cage rotor, for purposes of illustration and as shown in Figure 1, rotor core 20 of rotor 10 is formed by a plurality of identical rotor laminations 22. Rotor core 20, alternatively, can be formed from a one-piece steel stock. Rotor shaft bore 68 is configured to coaxially receive therein rotor shaft (shown in Figure 1). Rotor core 20 further includes a plurality of rotor bar openings 70 at an outer periphery 72 of rotor core 20. As shown, a plurality of rotor bars 74 are located, e.g.,cast, within respective rotor bar openings 70. Each rotor bar 74 has a first end 76 and a second end 78, and extends from rotor first end 80 to rotor second end 82.

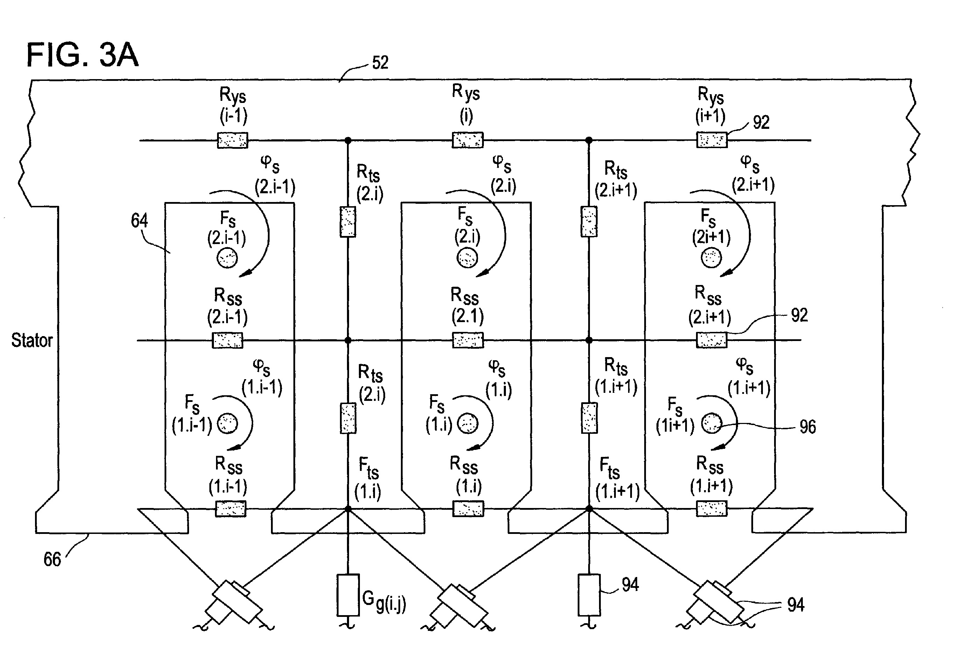

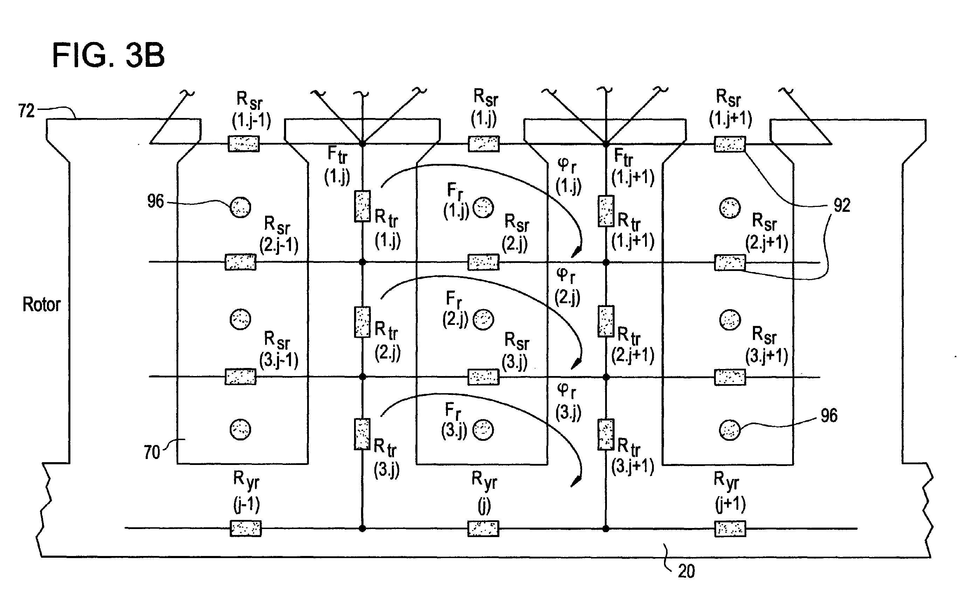

Figure 3 shows a section of a tooth level distributed MCM (Magnetic Circuit Model) 90 of an electric machine, similar to that of motor 50, shown in Figure 2. The tooth level distributed model 90 consists of a network of saturable permeance elements 92 and non-saturable permeance elements 94 as illustrated. MMF sources 96 in both the stator 52 and the rotor 10 result in flux flowing in the permeance network.

In operation, a voltage at a known frequency is impressed on the stator windings to energize the stator windings and generate a stator current, I_{STATOR}, in the stator windings. In an induction motor, stator current, I_{STATOR}, generates a magnetic field, which induces a rotor current, I_{ROTOR}, in rotor bars 74. As a result of the induced rotor current, I_{ROTOR}, in rotor bars 74, magnetic fields are generated, and the rotor bar magnetic fields couple with the stator magnetic fields to create a torque and rotate the motor.

Motors typically are configured to satisfy specific performance requirements measured at several steady state operating points. The performance requirements include rated operating point torque, current, slip, power factor, and efficiency, pullout (breakdown) torque, locked rotor torque and current, and no-load current.

The processes described below can be implemented, for example, in a personal computer programmed to execute each described step. The processes, however, can be implemented in many different manners and are not limited to being implemented and practiced on a personal computer. For example, the processes could be implemented in a server and accessed via a network, such as a local area network and/or a wide area network.

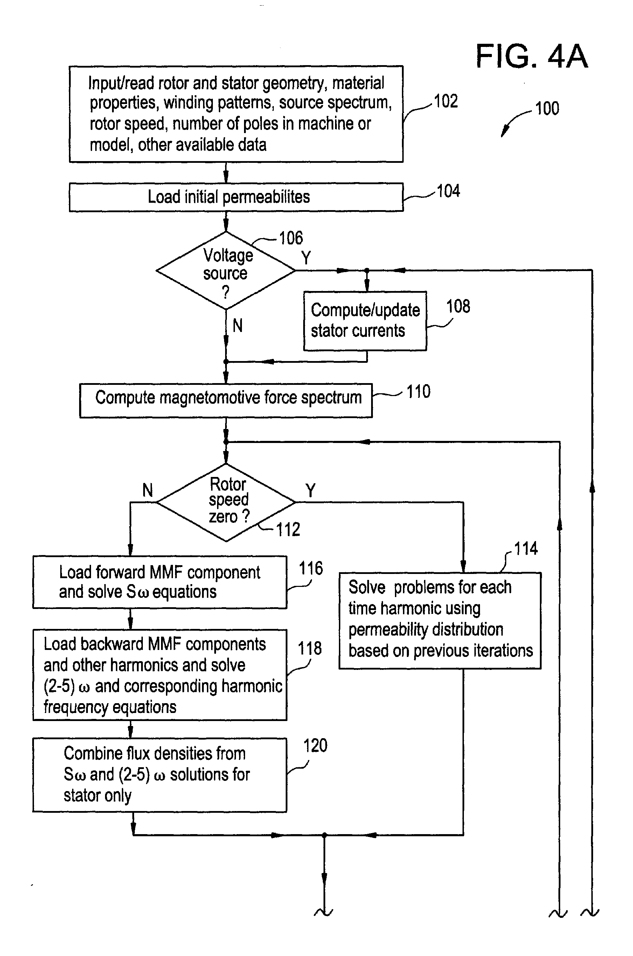

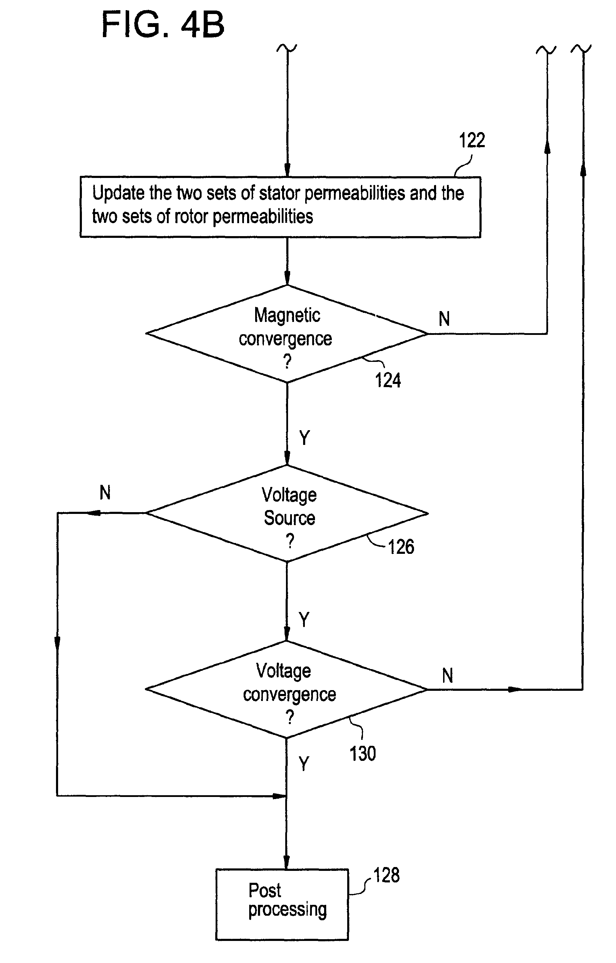

Figure 4 is a flow chart illustrating an accurate analysis tool 100 for frequency domain harmonic analysis of electric machines accounting for magnetic non-linearity according to one embodiment of the present invention. Analysis too 100 uses either MCM or FEM in the frequency domain to predict the behavior of induction machines, both single-phase and multi-phase, and other machines with an acceptable accuracy and a speed faster than known time domain MCM or FEM methods. Referring specifically to Figure 4, inputs 102 to modeling and analysis tool 100 include stator and rotor geometry, material properties (such as magnetic permeability curves and electrical conductivities), winding design patterns, a source type and spectrum, a number of circuit layers in the rotor and stator, rotor speed, a number of poles used in a model and any other relevant motor design data. In addition, an initial permeability is loaded 104 into analysis tool 100.

It is determined 106 whether or not the source type is a voltage source or a current source. If the source is a voltage source, currents are estimated 108. If the source is a current source, no estimation is required. Using the current estimation if the source is a voltage source, or alternatively, a current value of the current source, and based on the winding design pattern, a magnetomotive force (MMF) distribution is computed 110.

After MMF distribution is computed 110, and if the rotor is determined 112 to be in a locked condition, i.e. the rotor speed is zero, a problem is solved 114 because the electrical frequencies of the stator and rotor are the same. Therefore, MMF components do not need to be decomposed into forward and backward travelling waves. For single phase machines, the lack of need to decompose into travelling waves is especially applicable since a standing wave pattern at each time harmonic is retained. Using direct current (DC) or effective or any other set of B-H curves for the fundamental time harmonic component of the MMF, an electromagnetic problem is solved using conventional single frequency domain MCM or FEM. (B represents magnetic flux density and H represents magnetic field intensity.) (For other time harmonics, the above B-H curves or incremental B-H curves are used if the other time harmonic components are relatively small in amplitude.) A fundamental frequency solution is now obtained through distributed magnetic saturation convergence. An appropriate permeability distribution, such as incremental, is based on local fundamental frequency flux density distribution and assigned to the analysis model and treated as a constant for analysis of all other time harmonics. The total solution is obtained so that machine performance at zero speed can be predicted.

If the rotor is determined 112 to have a non-zero speed, the stator MMF distribution is decomposed into individual space and time harmonic components. Each such component can have forward and backward rotating sub-components. In a single phase machine, for example, if the rotor is rotating with slip, then the fundamental space and time MMF component with respect to the stator will be viewed by the rotor as if it were a forward travelling sub-component at *s* * ω, where ω is the fundamental frequency and s is per unit slip, and a backward travelling sub-component at *(2-s)* * ω. These two sub-components are at the fundamental frequency *(ω)* as far as the stator is concerned. If other significant harmonics are present, their respective solutions are also obtained using the same permeability distributions as used for the *(2-s)* ^{*} ω backward MMF sub-component.

The stator is loaded 116 with a forward rotating MMF sub-component. A first one step magnetic solution (via MCM or FEM), using applicable permeabilities, is obtained with fundamental frequency ω, in the stator and *s* ^{*} ω in the rotor. Next a backward rotating MMF sub-component is loaded 118, and a second one step magnetic solution, using applicable permeabilities, is obtained with fundamental frequency ω, in the stator and *(2-s)* * ω in the rotor. The resulting flux density distributions, the *s ** ω and *(2-s)* * ω solutions only, are combined 120 only for the stator, to update 122 the two stator magnetic permeability distribution patterns. Two sets of rotor magnetic permeability distribution patterns are updated 122 based on their larger amplitude flux density distribution due to the forward travelling MMF sub-component.

The first flux density distribution uses the DC or effective or any other preferred B-H curve for use with the forward rotating MMF sub-component analysis, while the second flux density distribution may use any of the other above or preferably the incremental B-H curve with the backward rotating MMF sub-component and all other harmonics.

Once the magnetic permeability patterns, two for stator and two for rotor, are obtained, some or all of them are checked 124 for convergence against similar data from a previous iteration or iterations. If magnetic convergence is obtained, then the motor is checked 126 to see if it is voltage sourced, if not, post processing to compute torque, losses, circuit parameters, etc. is performed 128 as the final step of the analysis. If the motor is voltage sourced, a check is made 130 for voltage convergence. If voltage convergence is obtained, then post processing, as described earlier, is carried out as the final step.

If voltage convergence is not obtained, then stator currents are updated and the complete magnetic analysis is redone, until both magnetic and voltage convergence criteria are met, and the post processing is carried out. The stator currents are updated based upon the voltage error (the applied voltage minus the voltage calculated from the last solution) using preferably a non-linear system equation solver such as the well known Newton's method.

For the sake of good order, various features of the invention are set out in the following clauses:
1. A method of performing electrical machine magnetic field analysis comprising the steps of:
   selecting and loading (104) electrical machine manufacturing data;
   determining (106) if the power source is a voltage source or a current source;
   computing (110) a magnetomotive force (mmf) spectrum;
   decomposing the stator magnetomotive force distribution into forward, backward and stationary harmonic components;
   computing a permeability distribution; and
   testing for magnetic convergence.
2. A method in accordance with Clause 1 further comprising the step of determining (112) if the rotor speed is zero or non-zero.
3. A method in accordance with Clause 1 wherein said step of decomposing the stator fundamental space and fundamental time magnetomotive force distribution further comprises obtaining a forward rotating sub-component at *s* ^{*} ω, and a backward travelling sub-component at *(2-s)* ^{*} ω, where s is per unit rotor slip and ω is a fundamental frequency.
4. A method in accordance with Clause 1 wherein said step of decomposing the stator magnetomotive force distribution further comprises obtaining forward and backward travelling harmonic sub-components at appropriate frequencies in rotor and stator reference frames.
5. A method in accordance with Clause 1 wherein said step of decomposing the stator magnetomotive force distribution further comprises the steps of:
   loading (116) the stator with a forward rotating magnetomotive force sub-component;
   obtaining a first magnetic solution, using applicable permeabilities using a fundamental frequency of co in the stator and *s* ^{*} ω in the rotor;
   loading (118) the stator with a backward rotating magnetomotive force sub-component; and
   obtaining a second magnetic solution, using applicable permeabilities using a fundamental frequency of co in the stator and (2-s) ^{*} *ω* in the rotor.
6. A method in accordance with Clause 5 wherein said step of decomposing the stator magnetomotive force distribution further comprises the steps of:
   combining (120) the first magnetic solution for *s* ^{*} *ω* and the second magnetic solution for *(2-s)* ^{*} ω for the stator; and
   updating (122) two stator magnetic permeability distribution patterns.
7. A method in accordance with Clause 6 wherein said step of decomposing the stator magnetomotive force distribution further comprises the steps of updating (122) two rotor magnetic permeability distribution patterns based on a flux density distribution due to the forward rotating magnetomotive force sub-component.
8. A method in accordance with Clause 1 wherein said step of testing for magnetic convergence further comprises the steps of:
   testing two stator magnetic permeability patterns for convergence against corresponding data from a previous solution or solutions; and
   testing two rotor magnetic permeability patterns for convergence against corresponding data from a previous solution or solutions.
9. Apparatus for performing electrical machine magnetic field analysis, said apparatus comprising a processor programmed to load (104) electrical machine manufacturing data, compute (110) a magnetomotive force spectrum, decompose the stator magnetomotive force distribution into forward, backward and stationary harmonic components and compute a permeability distribution, and test for magnetic convergence.
10. Apparatus in accordance with Clause 9 wherein said processor further configured with a rotor speed of zero or non-zero.
11. Apparatus in accordance with Clause 9 wherein said processor further configured to decompose the stator magnetomotive force distribution into a forward rotating sub-component at *s* ^{*} ω, and a backward travelling sub-component at (2-*s*) ^{*} ω, where s is per unit rotor slip and co is a fundamental frequency.
12. Apparatus in accordance with Clause 9 wherein said processor further configured to decompose the stator magnetomotive force distribution into other present significant forward and backward travelling harmonics at appropriate frequencies in rotor and stator reference frames.
13. Apparatus in accordance with Clause 9 wherein said processor further configured to:
   load (116) the stator with a forward rotating magnetomotive force sub-component;
   obtain a first magnetic solution, using applicable permeabilities using a fundamental frequency of ω in the stator and s ^{*} ω in the rotor;
   load (118) the stator with a backward rotating magnetomotive force sub-component; and
   obtain a second magnetic solution, using applicable permeabilities using a fundamental frequency of co in the stator and (2-s) ^{*} ω in the rotor.
14. Apparatus in accordance with Clause 13 wherein said processor further configured to:
   combine (120) the first magnetic solution for *s* ^{*} ω and the second magnetic solution for (2-s) ^{*} ω for the stator; and
   update (122) two stator magnetic permeability distribution patterns.
15. Apparatus in accordance with Clause 14 wherein said processor further configured to update (122) two rotor magnetic permeability distribution patterns based on a flux density distribution due to the forward rotating magnetomotive force sub-component.
16. Apparatus in accordance with Clause 9 wherein said processor further configured to:
   test two stator magnetic permeability patterns for convergence against data from a previous solution or solutions; and
   test two rotor magnetic permeability patterns for convergence against data from a previous solution or solutions.
17. Apparatus in accordance with Clause 16 wherein said processor further configured to compare and analyze magnetic permeability patterns obtained for stator and rotor for convergence against similar data obtained from previous iterations.
18. Apparatus in accordance with Clause 16 wherein said processor is further configured to check (124) the electrical machine to determine whether there is a magnetic convergence, and if so, determine if the magnetic convergence is voltage sourced.
19. Apparatus in accordance with Clause 18 wherein said processor is further configured to compute torque, losses, circuit parameters and other desired specifications if the magnetic convergence is determined not to be voltage sourced.
20. Apparatus in accordance with Clause 16 wherein said processor is further configured to check (130) the electrical machine for voltage convergence if the electrical machine is voltage sourced.
21. Apparatus in accordance with Clause 19 wherein said processor is further configured to compute torque, losses, circuit parameters and other desired specifications if the voltage convergence is obtained for the electrical machine.
22. Apparatus in accordance with Clause 19 wherein said processor is further configured to update stator currents and complete magnetic analysis for the electrical machine if the voltage convergence is not obtained for the electrical machine.
23. Apparatus in accordance with Clause 22 wherein said processor is further configured to ensure that the pre-established magnetic and voltage convergence criteria are achieved and repeat the process if the magnetic and voltage criteria are not achieved.
24. Apparatus in accordance with Clause 22 wherein said processor is further configured to update stator currents using a non-linear system equation solver.
25. Apparatus in accordance with Clause 24 wherein said processor is further configured utilize non-linear system equation solver such as Newton's method.

## Claims

1. A method of performing electrical machine magnetic field analysis comprising the steps of:
selecting and loading (104) electrical machine manufacturing data;
determining (106) if the power source is a voltage source or a current source;
computing (110) a magnetomotive force (mmf) spectrum;
decomposing the stator magnetomotive force distribution into forward, backward and stationary harmonic components;
computing a permeability distribution; and
testing for magnetic convergence.

2. A method in accordance with Claim 1 further comprising the step of determining (112) if the rotor speed is zero or non-zero.

3. A method in accordance with Claim 1 or 2 wherein said step of decomposing the stator fundamental space and fundamental time magnetomotive force distribution further comprises obtaining a forward rotating sub-component at *s* * ω, and a backward travelling sub-component at (2*-s*) * ω, where s is per unit rotor slip and ω is a fundamental frequency.

4. A method in accordance with Claim 1 or 2 wherein said step of decomposing the stator magnetomotive force distribution further comprises obtaining forward and backward travelling harmonic sub-components at appropriate frequencies in rotor and stator reference frames.

5. A method in accordance with Claim 1 or 2 wherein said step of decomposing the stator magnetomotive force distribution further comprises the steps of:
loading (116) the stator with a forward rotating magnetomotive force sub-component;
obtaining a first magnetic solution, using applicable permeabilities using a fundamental frequency of co in the stator and s ^{*} ω in the rotor;
loading (118) the stator with a backward rotating magnetomotive force sub-component; and
obtaining a second magnetic solution, using applicable permeabilities using a fundamental frequency of co in the stator and (2-*s*) * *ω* in the rotor.

6. Apparatus for performing electrical machine magnetic field analysis, said apparatus comprising a processor programmed to load (104) electrical machine manufacturing data, compute (110) a magnetomotive force spectrum, decompose the stator magnetomotive force distribution into forward, backward and stationary harmonic components and compute a permeability distribution, and test for magnetic convergence.

7. Apparatus in accordance with Claim 6 wherein said processor further configured with a rotor speed of zero or non-zero.

8. Apparatus in accordance with Claim 6 or 7 wherein said processor further configured to decompose the stator magnetomotive force distribution into a forward rotating sub-component at *s* ^{*} ω, and a backward travelling sub-component at *(2-s)* * *ω*, where s is per unit rotor slip and co is a fundamental frequency.

9. Apparatus in accordance with Claim 6 or 7 wherein said processor further configured to decompose the stator magnetomotive force distribution into other present significant forward and backward travelling harmonics at appropriate frequencies in rotor and stator reference frames.

10. Apparatus in accordance with any one of Claims 6 to 9 wherein said processor further configured to:
load (116) the stator with a forward rotating magnetomotive force sub-component;
obtain a first magnetic solution, using applicable permeabilities using a fundamental frequency of *ω* in the stator and s * ω in the rotor;
load (118) the stator with a backward rotating magnetomotive force sub-component; and
obtain a second magnetic solution, using applicable permeabilities using a fundamental frequency of co in the stator and (2-*s*) * *ω* in the rotor.
